# FASCICULE DE BREVET EUROPEEN

(11) **EP 2 649 469 B1**
(45) Date de publication et mention de la délivrance du brevet: **01.04.2015**
(21) Numéro de dépôt: 11784501.6
(22) Date de dépôt: 18.11.2011
(51) Int. Cl.: G01S 17/74, G01S 7/483

(54) **ÉQUIPEMENT ET PROCEDE OPTIQUE DE TÉLÉMÉTRIE ET DE COMMUNICATION HAUT DÉBIT**
OPTISCHE VORRICHTUNG UND VERFAHREN FÜR TELEMETRIE UND KOMMUNIKATION MIT HOHER BITRATE
OPTICAL EQUIPMENT AND METHOD FOR TELEMETRY AND FOR HIGH BIT RATE COMMUNICATION

(30) Priorité: 10.12.2010 FR 1004817
(43) Date de publication de la demande: 16.10.2013
(73) Titulaire: THALES, 92200 Neuilly-sur-Seine (FR)
(72) Inventeur: ROUSSEAU, Pascal, F-78995 Elancourt (FR)
(74) Mandataire: Henriot, Marie-Pierre
(86) Numéro de dépôt international: PCT/EP2011/070428
(87) Numéro de publication internationale: WO 2012/076316

(56) Documents cités:
- WO-A1-2005/001511
- FR-A1- 2 604 796
- FR-A1- 2 681 143
- FR-A1- 2 913 269
- US-B1- 6 219 596

## Description

Le domaine de l'invention est celui des équipements assurant des fonctions de télémétrie optique et de communication optique en espace libre. Il s'agit plus spécifiquement d'un équipement dont la portée du télémètre aéroporté en air-air peut atteindre jusqu'à plusieurs dizaines de kilomètres et assurant des communications en espace libre à très haut débit, de l'ordre de plusieurs GigaHertz.

Un télémètre permet la mesure de la distance le séparant d'une cible. Un télémètre optique utilise la propagation de la lumière comme moyen de mesure. Il comprend un émetteur et un récepteur. Il émet de la lumière en direction de la cible et détecte une fraction de cette lumière retournée par la cible. La distance est obtenue à partir du temps de propagation aller et retour de la lumière à partir de l'émetteur jusqu'au récepteur. L'émission est modulée temporellement. La lumière émise transporte cette modulation jusqu'à la cible. La lumière est absorbée par l'atmosphère, le long du trajet aller. Elle est alors absorbée et réfléchie ou rétro diffusée par la cible puis absorbée par l'atmosphère sur le trajet retour ; elle est diluée le long du chemin retour d'un facteur proportionnel au carré de la distance. Une fraction de cette lumière retournée transporte la modulation jusqu'au récepteur du télémètre. Cette modulation temporelle permet d'identifier le départ de l'impulsion et l'identification de son retour par le récepteur. Le temps écoulé entre ces deux événements permet de calculer la distance ente le télémètre et la cible à partir de la vitesse de propagation de la lumière dans les milieux traversés.

Quand la distance augmente, la quantité de lumière détectée décroît rapidement. Pour augmenter la distance de télémétrie malgré ces pertes atmosphériques, les voies suivantes sont possibles :
- augmenter l'énergie par impulsion, mais cette augmentation est limitée par les contraintes de sécurité oculaire et par le volume de l'émetteur qui augmente avec l'énergie par impulsion,
- augmenter la dimension de la pupille de réception mais cela augmente les dimensions du système,
- augmenter la sensibilité du récepteur avec des systèmes à multi-impulsions utilisant des micro-lasers ou des lasers à fibres optiques. Ceci permet d'utiliser la post-intégration. Il y a augmentation de la puissance moyenne (énergie par impulsion x cadence) sans augmenter l'énergie par impulsion.

Actuellement on distingue trois principales catégories de télémètres laser.
- Les télémètres ayant une émission continue modulée
- Les télémètres multi-impulsions
- Les télémètres mono-impulsion

Les télémètres ayant une émission continue modulée sont utilisés avec des cibles coopératives dont le temps de mesure n'est pas critique. Une cible coopérative est par exemple équipée d'un rétro-réflecteur, et renvoie ainsi la lumière dans un cône étroit dans la direction de l'émetteur. Le système est conçu pour que la réception soit possible et pendant l'émission.

Pour des cibles non coopératives situées à de longues distances de l'ordre de plusieurs dizaines de km, les télémètres utilisent habituellement une seule impulsion de grande énergie limitée par la sécurité oculaire dans les conditions d'emploi: l'exposition intégrée sur 10 secondes, pour une longueur d'onde comprise entre 1,5 et 1,8 µm, doit rester inférieure à 10 000 J/m². Cette limite, suivant les applications, permet des énergies par impulsion de quelques millijoules à plusieurs dizaines de millijoules. Pour atteindre une bonne précision en distance, les impulsions ont une durée très courte : de l'ordre de 10 ns. La détection des échos n'est pas possible pendant l'émission des impulsions.

Pour les courtes distances (< 10 km) il est possible d'utiliser comme émetteur des diodes laser. L'énergie par impulsion est très faible. La performance est obtenue par de multiples impulsions avec une détection avec post intégration. La durée d'impulsion de l'ordre de 10 à 50 ns est très faible comparativement à la période entre les impulsions qui est de l'ordre de 1 à 50 µs. Pendant l'émission la réception est aveugle. La diffusion de la lumière émise par l'atmosphère à courte distance (de quelques mètres à quelques dizaines de mètres) aveugle la réception. Au-delà la détection a lieu durant la période entre les impulsions. La détection de l'écho est une détection d'énergie.

La post-intégration présente certains inconvénients.

On rappelle en effet que :
si pour une impulsion émise, on a pour l'écho un rapport signal à bruit S/B,
alors pour n impulsions émises on a (nS)/(n ^{½} B), soit (n ^{½} S)/B, d'où une amélioration d'un facteur n ^{½}.

Mais dans le cas de la post-intégration, la fréquence de répétition des impulsions (ou cadence) limite la distance atteignable en raison de l'ambiguïté sur la distance. Cette ambiguïté se produit quand une impulsion détectée provient soit de la dernière impulsion émise, retournée par une cible proche, soit d'une impulsion émise antérieurement et retournée par une cible éloignée, sans que l'on puisse déterminer entre ces 2 alternatives quelle cible est mesurée. En acceptant une plus grande plage temporelle de réception aveugle, chaque impulsion peut être remplacée par un train d'impulsions.

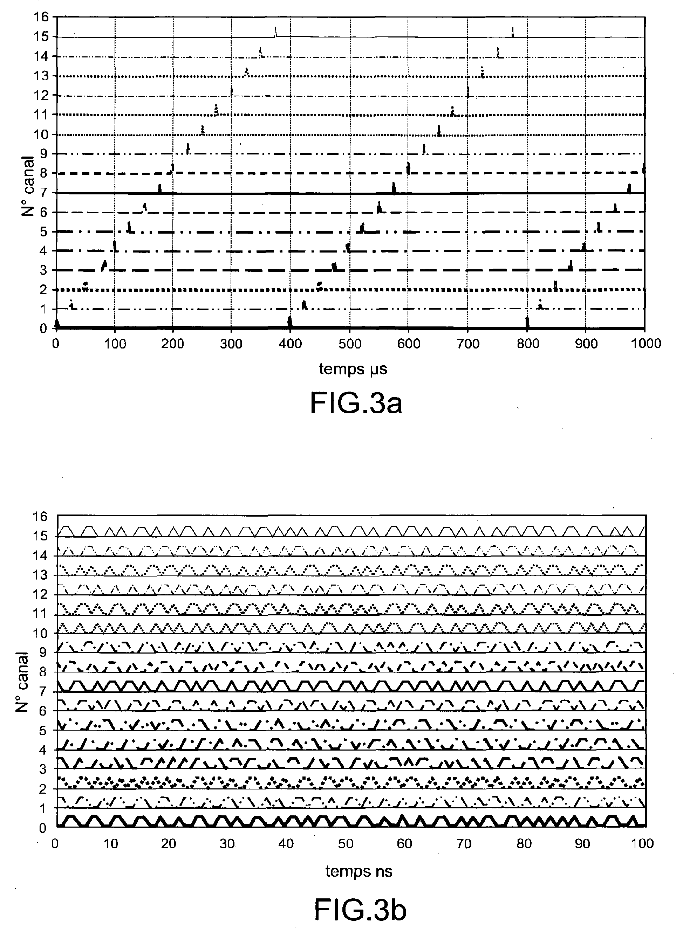

Un système optique de communication haut débit en espace libre comprend également un dispositif d'émission laser d'un signal optique et si la communication est bidirectionnelle, il comprend en outre un dispositif de réception des signaux optiques émis par un autre système de communication. Le signal optique émis est une succession rapide d'impulsions à une période de répétition typiquement comprise entre 1 ns et 20 ms. Les intervalles entre les impulsions ont des durées semblables aux largeurs d'impulsion. Les données numériques sont composées de 0 et de 1. A chaque bit de donnée est associée une durée unitaire : une impulsion pendant cette durée unitaire représente un 1, pas d'impulsion pendant cette durée représente un 0. Les suites de données sont en outre généralement codées par des successions d'impulsions et par des périodes entre les impulsions. La puissance crête des impulsions de communication est en moyenne le double de la puissance moyenne de l'émission de communication. L'émission est du type continu modulé sur deux niveaux 0 et 1. Dans la suite, une telle succession d'impulsions ainsi modulée est désignée signal optique de communication. Plusieurs exemples (16 exemples) de signaux de communication à très haut débit sont montrés figure 3b. Sur les 10 premières ns, l'exemple du 4è canal correspond à la suite numérique suivante : 00100110010.

Le dispositif d'émission du télémètre et celui du système de communication obéissent donc à des contraintes contradictoires, ainsi que leurs dispositifs de réception. D'où l'utilisation de deux dispositifs indépendants pour assurer les fonctions de télémétrie longue portée et de communication optique haut débit en espace libre. De tels équipements sont alors encombrants et lourds. Le but de l'invention est de pallier ces inconvénients.

On connaît aussi le document WO 2005/001511 qui présente un système intégré de télémétrie et de communications optiques ; il comporte un laser commun au télémètre et au système de communication optique.

La solution selon l'invention est basée sur l'utilisation d'un dispositif d'émission laser unique pouvant fonctionner dans deux modes différents, en mode impulsionnel, favorisant l'énergie par impulsion, pour la télémétrie et en mode continu modulé linéaire pour les communications optiques haut débit.

Plus précisément l'invention a pour objet un équipement optique de télémétrie et de communication en espace libre qui comprend un télémètre comportant un dispositif d'émission d'un signal optique vers une cible et un dispositif de réception des signaux rétro-diffusés par la cible, et un système de communication optique en espace libre comportant un dispositif d'émission d'un signal optique vers un dispositif de réception optique distant. Il est principalement caractérisé en ce que le dispositif d'émission du télémètre et le dispositif d'émission du système de communication est un dispositif d'émission commun au télémètre et au système de communication et apte à émettre des impulsions dont la puissance crête est supérieure à 50 W et le facteur de forme est inférieur à 0,01 ou un signal continu modulé dont la puissance crête est inférieure à 10 W et le facteur de forme égal à environ 0,5 et en ce que l'équipement comprend un superviseur apte à commander le dispositif d'émission commun selon deux modes, le mode impulsionnel pour ainsi assurer la fonction de télémétrie, ou le mode continu modulé pour ainsi assurer la fonction de communication optique.

Cet équipement permet d'assurer les deux fonctions de télémétrie longue portée et de communication optique haut débit avec un équipement unique. Il est souple d'emploi avec un passage instantané d'un mode à l'autre, ce qui autorise l'imbrication des deux modes comme on va le voir plus loin.

Selon une caractéristique de l'invention, le dispositif d'émission commun comprend un émetteur à diode laser qui comporte une alimentation électrique, et le superviseur comprend des moyens de commande de l'alimentation électrique de l'émetteur à diode laser.

Cet émetteur à diode laser peut être une diode laser mono-ruban ou un empilement de diodes mono-ruban apte à émettre collectivement.

De préférence, le dispositif d'émission comprend un émetteur et un amplificateur relié à la sortie de l'émetteur.

Selon une caractéristique de l'invention, l'équipement comprend un dispositif de réception de signaux émis par un autre dispositif de communication optique en espace libre, le dispositif de réception du télémètre et ce dispositif de réception du système de communication étant un dispositif de réception commun, et l'équipement comprend une commande du dispositif de-réception en mode télémétrie ou en mode communication.

Le superviseur comprend par exemple la commande du dispositif de réception.

Les dispositifs d'émission et de réception sont avantageusement multi-longueur d'onde.

Selon une caractéristique de l'invention, l'émetteur multi longueur d'onde comprend plusieurs émetteurs, chacun étant apte à émettre selon une longueur d'onde différente des autres et il comprend un seul amplificateur large bande relié à tous ces émetteurs.

Lorsque le dispositif de réception est multi-longueur d'onde, au moins certaines longueurs d'onde de réception sont identiques à certaines longueurs d'onde d'émission.

L'invention a aussi pour objet un procédé de télémétrie d'une cible au moyen d'un équipement optique de télémétrie et de communication tel que décrit précédemment, qui comprend une étape d'émission d'impulsions laser vers la cible au moyen du dispositif d'émission commun et une étape de réception des impulsions rétro-diffusées par la cible au moyen du dispositif de réception du signal rétro-diffusé par la cible. Il est caractérisé en ce qu'il comprend en outre une étape d'émission au moyen dudit dispositif d'émission commun d'un signal optique continu modulé de communication vers un dispositif de réception de ce signal de communication, l'étape d'émission d'un signal de communication étant réalisée en dehors des étapes d'émission et de réception de télémétrie.

Selon une caractéristique de l'invention, il comprend plusieurs étapes d'émission d'un signal de communication, et l'étape d'émission d'impulsions laser vers la cible, l'étape de réception des impulsions rétro-diffusées par la cible et ces étapes d'émission d'un signal de communication sont imbriquées de manière à ce qu'un signal optique de communication soit émis entre deux impulsions et en dehors de l'étape de réception des impulsions rétro-diffusées par la cible.

Selon une autre caractéristique de l'invention, le dispositif d'émission comportant un seul amplificateur, l'intervalle de temps entre deux impulsions de télémétrie consécutives ou entre la fin d'un signal de communication et l'impulsion de télémétrie consécutive est supérieur ou égal au temps de pompage de l'amplificateur jusqu'à saturation.

Lorsque le dispositif d'émission est multi longueur d'onde et ne comporte qu'un seul amplificateur large bande, l'intervalle de temps entre deux impulsions de télémétrie de longueur d'onde différente et consécutives est supérieur ou égal au temps de pompage de l'amplificateur jusqu'à saturation, l'intervalle de temps entre la fin d'un signal de communication et l'impulsion de télémétrie consécutive de même longueur d'onde est supérieur ou égal au temps de pompage de l'amplificateur jusqu'à saturation, et les signaux de communication de longueur d'onde différente sont émis en même temps.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de dispositif d'émission et de dispositif de réception commun au télémètre et au système de communication dans une configuration mono longueur d'onde avec un amplificateur,
la figure 2 représente schématiquement un exemple de dispositif d'émission et de dispositif de réception commun au télémètre et au système de communication dans une configuration multi longueur d'onde avec un amplificateur large bande unique,
les figures 3 illustrent schématiquement des exemples d'instants d'émission des impulsions en mode télémétrie (fig 3a), en mode communication (fig 3b) et en modes imbriqués (fig 3c et 3d) pour un équipement multi longueur d'onde.

D'une figure à l'autre, les mêmes éléments sont repérés par les mêmes références.

L'équipement optique de télémétrie et de communication peut être mono longueur d'onde ou multi longueur d'onde.

On considère tout d'abord un équipement mono longueur d'onde.

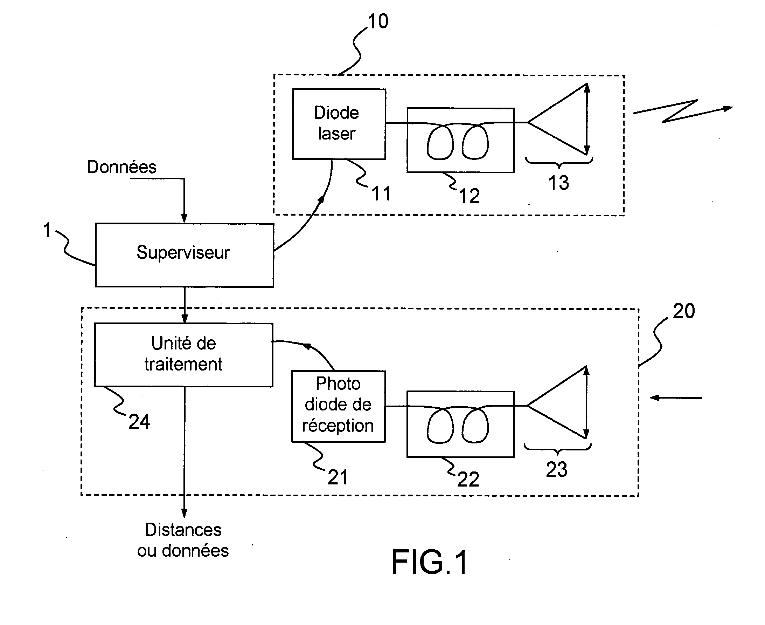

On va décrire en relation avec la figure 1 un dispositif d'émission 10 commun au télémètre et au système de communication. Il comprend une source laser 11 pouvant être reliée en sortie à un amplificateur 12 tel qu'un amplificateur fibré.

On envisage dans un premier temps le cas d'un émetteur à diode laser qui n'est pas relié en sortie à un amplificateur.

L'émetteur diode laser peut être une diode laser mono-ruban ou un empilement de diodes mono-ruban émettant collectivement.

La largeur d'impulsion est faite par l'alimentation de la diode laser ou par celle de l'empilement. Au delà d'un seuil, la puissance d'émission est proportionnelle au courant de l'alimentation.

En fonctionnement quasi continu pour la communication le courant maximal et donc la puissance moyenne sont principalement limités par la thermique du composant.

En télémétrie, avec des impulsions très courtes, la puissance crête peut être beaucoup plus importante et atteindre environ 30 fois la puissance moyenne utilisée en fonctionnement quasi continu. Il n'y a pas de limitation thermique comme précédemment, mais une limitation par la tenue au flux optique des faces des composants de la diode laser.

Le profil temporel d'émission est très différent pour la télémétrie et la communication. C'est par la commande électrique de la diode laser que les deux fonctions sont différenciées en fonction du profil temporel souhaité et du courant maximal possible.

En prenant comme exemple une diode laser simple, on obtient pour la fonction de télémétrie, des impulsions ayant une puissance crête de quelques dizaines de Watts et une fréquence de répétition de 20 à 30 kHz, en faisant varier le courant de la diode de 0 à 10 A, à cette même fréquence de répétition. On obtient pour la fonction de communication, un signal optique modulé selon une fréquence de plusieurs MHz et ayant une puissance moyenne d'environ 100 mW, en faisant varier le courant de la diode de 0 à 100 mA, à cette même fréquence.

On envisage à présent un émetteur à diode laser suivi d'un amplificateur optique.

L'amplificateur optique 12 permet d'augmenter les performances de la télémétrie et de la communication. En télémétrie, cet amplificateur permet d'augmenter l'énergie de l'impulsion émise. En communication c'est la puissance optique qui est principalement augmentée par l'amplificateur.

En télémétrie, le pompage de l'amplification entre deux impulsions doit permettre à chaque impulsion d'avoir l'énergie demandée. L'intervalle de temps entre deux impulsions est ajusté pour que l'amplificateur soit pompé jusqu'à saturation avant qu'une nouvelle impulsion ne soit émise par la diode laser. Lorsque l'impulsion est émise, elle est amplifiée. Cette amplification dépend de l'énergie de l'impulsion en entrée de l'amplificateur. Lorsque l'énergie de l'impulsion optique de la diode laser est suffisante pour que toute l'énergie stockée dans l'amplificateur soit transférée dans l'impulsion émise, l'impulsion émise est alors amplifiée au maximum. L'amplificateur utilisé est conçu pour fournir de fortes énergies par impulsion. L'énergie par impulsion peut être de la classe millijoule. De tels amplificateurs sont disponible chez Manlight (classe de produit Luskenn) ou Keopsys (Classe de produit EOLA).

En communication, la diode laser émet le train d'impulsions du signal de communication pendant que l'amplificateur est pompé ; entre deux impulsions de ce train d'impulsions, l'amplificateur n'a pas le temps d'atteindre le mode saturé. Le niveau de puissance moyenne de la diode laser est ajusté pour optimiser le rendement du dispositif c'est-à-dire pour que toutes les impulsions du signal de communication soient amplifiées au maximum avec toutes le même gain.

Pour des raisons d'optimisation, l'amplificateur 12 étant commun aux deux fonctions télémétrie et communication, des circuits disposés entre la diode laser 11 et l'amplificateur 12 peuvent être ajoutés, un pour la télémétrie un autre pour la communication. Le circuit pour la télémétrie est typiquement un préamplificateur pour augmenter l'énergie de l'impulsion et ainsi favoriser l'extraction de l'énergie de l'amplificateur le circuit pour la communication peut aussi être un préamplificateur qui a pour fonction d'ajuster l'énergie de chaque impulsion dans une fourchette prédéterminée. Le même préamplificateur peut être utilisé pour la télémétrie et pour la communication à condition d'être adapté en fonction de son utilisation comme indiqué précédemment.

Pour un émetteur mettant en oeuvre un amplificateur, les fonctions télémétrie et communication sont possibles séquentiellement ; elles peuvent aussi être imbriquées chronologiquement. Comme on l'a vu précédemment, il est nécessaire en télémétrie que l'amplificateur 12 ait sa pleine capacité en énergie pour chaque impulsion. Après l'émission d'une impulsion de télémétrie, l'amplificateur a besoin d'un temps de pompage suffisant pour avoir le gain attendu pour amplifier un train d'impulsion de communication. De même après l'amplification du train d'impulsions de communication, un temps est nécessaire pour que l'amplificateur récupère ses pleines capacités pour l'amplification des impulsions pour la télémétrie. Cette contrainte est la même pour un émetteur mono longueur d'onde ou multi longueurs d'onde. En outre, l'émission de communication n'est pas possible pendant l'attente d'écho de télémétrie.

On va détailler à présent la partie réception d'un équipement mono longueur d'onde. Elle comprend un dispositif de réception pour la télémétrie et dans le cas d'un système de communication bidirectionnelle, elle comprend aussi un dispositif de réception pour la communication. Ces dispositifs de réception peuvent être indépendants l'un de l'autre.

Le dispositif de réception pour la télémétrie comprend schématiquement un objectif de collecte de la lumière venant de la cible, qui la focalise sur un détecteur. Il peut exister un transport par fibre entre le point de focalisation de l'objectif de collecte et le détecteur. Des dispositifs de filtrage spectral et de séparation des voies émission et réception peuvent aussi être interposés. Une amplification optique ou une transposition de longueur d'onde peuvent aussi être dans le trajet avant le photo détecteur. Le photo détecteur de réception peut être une photodiode PIN ou à avalanche. La bande passante électrique du circuit transimpédance associé à ce photodétecteur est adaptée à la largeur des impulsions à détecter qui est typiquement comprise entre 10 et 50 ns.

Dans le cas de la télémétrie, l'extraction d'une impulsion est recherchée dans le bruit pour la durée correspondant à l'étendue de distance où peut être la cible. Suivant le mode de fonctionnement mono-impulsion ou multi-impulsions (et donc avec post-intégration), des traitements analogiques et numériques connus de l'homme du métier permettent de déterminer les distances. La limite des traitements est le taux de fausses alarmes, soit combien de fausses distances sont remontées en fonction du nombre d'essais.

L'amélioration des performances consiste à détecter des signaux les plus faibles possibles en maîtrisant tous les bruits associés à la détection. Les sources de bruit sont optiques et électroniques.

Le dispositif de réception pour la communication comprend schématiquement un objectif de collecte de la lumière qui est émise en direct par l'émetteur distant d'un autre système de communication, la focalisant sur un détecteur. Il peut exister un transport par fibre entre le point de focalisation de l'objectif de collecte et le détecteur. Des dispositifs de filtrage spectral et de séparation des voies émission et réception peuvent aussi être interposés. Une amplification optique ou une transposition de longueur d'onde peuvent aussi être dans le trajet avant le photo détecteur. Le photo détecteur de réception pour la communication peut être une photodiode PIN ou à avalanche. Le détecteur peut être un mono élément ce qui signifie un seul canal de communication ; ce mono élément peut être capable de détecter indifféremment une ou plusieurs longueurs d'onde.

La bande passante électrique du circuit transimpédance associé au photodétecteur est adaptée au débit qui est plus élevé qu'en télémétrie ; il est supérieur à 100 MHz.

La performance de communication dépend du débit acceptable par l'émetteur, le récepteur et de l'énergie détectable.

Dans le cas de la communication, à chaque instant le traitement doit discerner un 1 ou un 0. La limite des traitements est le taux d'erreur.

L'amélioration des performances consiste à augmenter le débit d'informations transmises. Le débit en mono longueur d'onde, augmente avec la fréquence du train d'impulsions. Pour que la communication soit encore détectée, la bande passante doit être augmentée pour rester adaptée.

La réception de communication est éclairée en direct par l'émetteur distant. En fonction de la distance, des conditions de réception et de la conception du récepteur, l'énergie par bit et la fréquence de la communication sont limitées.

Selon un mode de réalisation particulier de l'invention, le dispositif de réception pour la télémétrie n'est pas indépendant de celui du système de réception pour la communication. En fonction des performances attendues en débit de la communication, la détection de télémétrie et la détection de communication partagent tout ou partie des éléments nécessaires. Le dispositif de réception 20 de l'équipement peut être commun à la télémétrie et à la communication bidirectionnelle. Le circuit transimpédance associé au photodétecteur peut être le même. Mais il peut être nécessaire d'avoir une détection à deux modes présentant une bande passante adaptée à la télémétrie et une autre bande passante adaptée à la communication. Le signal de détection est ensuite traité suivant son usage, télémétrie ou communication.

Le traitement des données issues de la télémétrie et de la communication sont différents du fait notamment des débits très différents. La télémétrie se limite à quelques impulsions reçues par seconde. La communication peut avoir des débits du kilobits au Gigabits par seconde.

Ce dispositif de réception commun 20 peut fonctionner en télémétrie ou en communication. Ce double fonctionnement permet de télémétrer la cible et de lui transmettre des informations.

Pour un émetteur à diode à une seule longueur d'onde, il est risqué d'avoir une émission de communication lorsque le télémètre attend des échos de télémétrie. La diffusion de la lumière émise peut perturber la réception de télémétrie. Les deux fonctions sont possibles séquentiellement.

On montre figure 1 un exemple d'équipement de télémétrie et de communication mono longueur d'onde selon l'invention. Il comprend un superviseur 1 apte à recevoir les données de communication ou de télémétrie et à les transmettre au dispositif d'émission commun 10 en séquençant les étapes d'émission et de réception de télémétrie et les étapes d'émission et éventuellement de réception de communication. Le dispositif d'émission commun 10 comprend une diode laser 11 éventuellement reliée en sortie à un amplificateur 12 lui-même relié à un dispositif 13 optique de mise en forme du faisceau émis. Le dispositif de réception commun 20 comprend un objectif 23 de collecte de la lumière émise par la cible ou par un émetteur de communication distant ; cet objectif 23 est relié éventuellement à un amplificateur 22 lui-même relié à un photo détecteur 21 qui transmet le signal détecté à une unité de traitement 24 apte à fournir en sortie des distances de cibles et des données de communication selon que le superviseur 1 commande cette unité de traitement 24 en mode télémétrie ou communication.

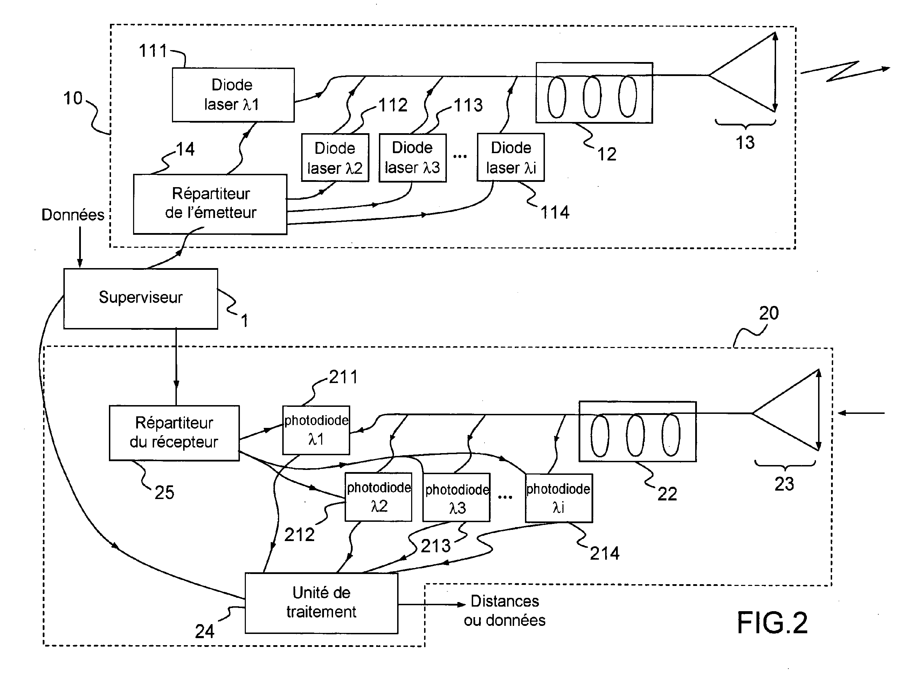

Avantageusement, l'équipement selon l'invention est multi-longueur d'onde, ce qui permet d'augmenter la portée de la télémétrie et le nombre de codes pour les communications haut débit. Il est décrit en relation avec la figure 2.

On considère tout d'abord le dispositif d'émission commun 10 au télémètre et au système de communication.

Dans le cas d'un système multi-longueur d'onde, il y a autant de diodes laser 111, 112, 113, 114 que de longueurs d'onde à émettre. Dans le cas de l'usage d'un amplificateur 12, il est commun à toutes les longueurs d'onde. Avant l'amplificateur les émissions des diodes laser sont superposées en un seul faisceau. Ceci peut être réalisé par miroirs ou par couplage de fibres. La sortie est commune à toutes les émissions.

En mode télémétrie, chaque longueur d'onde est émise seule pour avoir le plus fort contenu énergétique. L'avantage du multi longueur d'onde est la possibilité d'augmenter la fréquence de répétition des impulsions sans problème d'ambiguïté distance. Ceci équivaut en effet à disposer de N télémètres en parallèle, chacun ayant une ambiguïté de distance assez grande par rapport à la portée visée pour la télémétrie. Dans ce mode impulsionnel, la fréquence de répétition des impulsions est inférieure à la fréquence seuil. Ainsi aucun émetteur ne rencontre le problème de l'ambiguïté sur la distance. D'une longueur d'onde à l'autre, les fréquences de répétition des impulsions peuvent être différentes ou identiques. Les instants d'émission des impulsions de télémétrie, de longueurs d'onde différentes sont de préférence différents en raison de l'énergie nécessaire pour chaque impulsion qui autrement serait partagée ; sur la figure 3a, N longueurs d'onde (N=16 sur la figure) sont émises successivement et la fréquence de répétition est la même d'une longueur d'onde à l'autre, en l'occurrence 400 µs pour une distance d'ambiguïté pour des cibles à partir de 60 km. Les trains de N impulsions sont répétés un grand nombre de fois afin d'obtenir le bilan de portée par post-intégration. La séquence d'impulsions est donc: λ1, ..., λN, λ1, ..., λN, ...

Comme l'amplificateur est commun à toutes les longueurs d'onde, le pompage de l'amplification entre deux impulsions de longueur d'onde différente, doit permettre à chaque impulsion d'avoir l'énergie demandée. Sur l'exemple de la figure 3a, l'intervalle entre deux impulsions de longueur d'onde différente est de 25 µs ; le pompage dure donc au maximum 25 µs.

L'ordre des longueurs d'onde n'a pas d'incidence sur la portée de télémétrie.

L'ordre des longueurs d'onde peut être porteur d'information et être utilisé à d'autres fins, d'identification par exemple.

Le fonctionnement en communication dépend de la capacité du récepteur distant auquel est destinée cette communication. Si ce récepteur distant a un seul détecteur, un seul canal de communication peut être établi. Le récepteur distant peut être apte à recevoir différentes longueurs d'onde. Le dispositif d'émission doit émettre à une longueur d'onde détectable par le récepteur distant. Si la longueur d'onde de réception est inconnue, l'émission peut aussi activer en parallèle plusieurs des longueurs d'onde émettant de manière identique et synchrone.

La communication peut aussi être dédiée à une classe de récepteurs caractérisée par sa capacité à recevoir certaines longueurs d'onde. La discrétion peut être assurée par un choix de longueur d'onde en dehors de celles utilisées par la plupart des télémètres.

Pour les communications, les N longueurs d'onde sont utilisées simultanément et portent des codes indépendants (on a typiquement N=16). Et à chaque longueur d'onde est associé un code. Ce code consiste par exemple à moduler la cadence des impulsions qui varie d'une longueur d'onde à l'autre comme on peut le voir figure 3b. Chaque longueur d'onde est un canal d'information indépendant des autres. L'émission activera indépendamment chaque longueur d'onde pouvant être détectée par le récepteur distant. L'amplification à l'émission peut être commune à toutes les longueurs d'onde. Dans ce cas, les signaux de communication généralement différents d'un canal à l'autre, sont simultanément émis à toutes les longueurs d'onde car il ne peut y avoir d'émission d'impulsions de télémétrie pendant l'émission d'un signal de communication. Ceci permet d'émettre autant de canaux indépendants de communication. Le débit de la communication est le produit du nombre de canaux par le débit de chaque canal. Certains de ces canaux peuvent être exclusivement dédiés à la télémétrie.

La figure 3b représente le fonctionnement de 16 canaux de communication simultanée à 1 GigaHertz chacune, soit un débit total de l'ordre de 16 Gigabit/seconde.

Le dispositif d'émission commun peut fonctionner en télémétrie et en communication. Ce double fonctionnement permet de télémétrer la cible et de lui transmettre des informations.

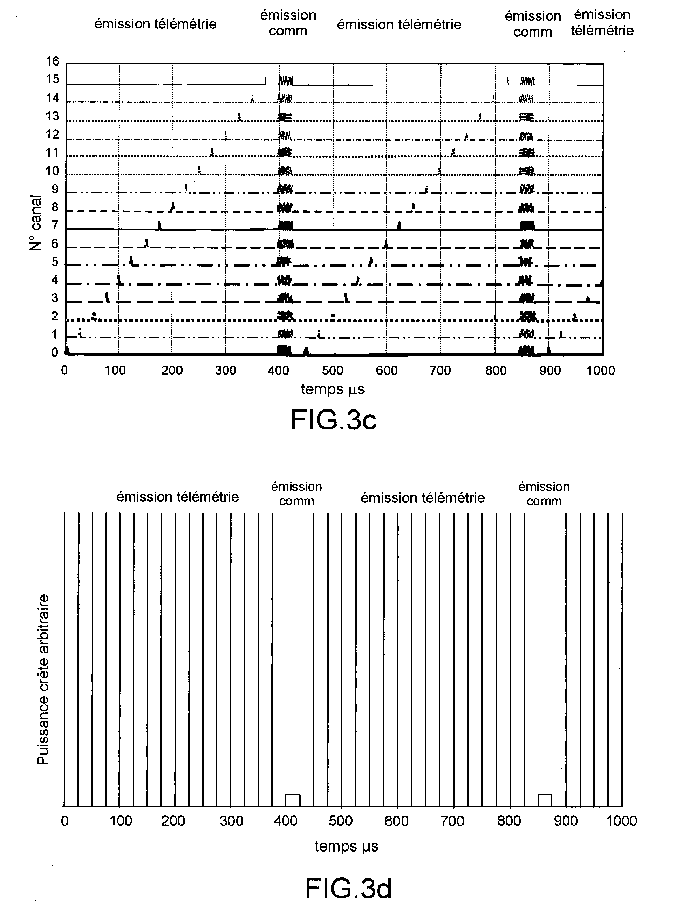

L'équipement multi-longueur d'onde peut également fonctionner avec les deux modes imbriqués. Ce double mode est illustré figure 3c, pour une configuration du dispositif d'émission avec un seul amplificateur pour toutes les longueurs d'onde. L'amplificateur reste en mode saturé le temps d'émettre une impulsion pour chaque longueur d'onde avec des instants d'émission décalés d'une longueur d'onde à l'autre, puis bascule en mode continu pendant l'émission pour chaque longueur d'onde du signal modulé, ces émissions étant simultanées. Vu de l'amplificateur, l'exemple de la figure 3c se projette chronologiquement sur l'axe du temps en une figure 3d : l'amplificateur dispose d'un temps de pompage d'environ 25 µs entre deux amplifications d'impulsions de télémétrie de longueur d'onde différente, ou entre l'amplification d'une impulsion de télémétrie et celle de la 1^{ère} impulsion du train d'impulsions de communication. Compte tenu de ces contraintes venant de l'amplification, pour chaque longueur d'onde l'émission de communication n'est pas possible pendant l'attente d'échos de télémétrie de cette même longueur d'onde.

La figure 3c représente une possibilité de fonctionnement de télémétrie et communication utilisant 16 longueurs d'onde. Le mode de fonctionnement représenté oblige à neutraliser les récepteurs de télémétrie pendant l'émission de communication. Le système aurait en télémétrie une efficacité équivalente à l'utilisation de l'ordre de 14 à 15 longueurs d'onde : en effet il est possible que pour une (ou deux) longueur d'onde le signal de communication soit émis pendant la réception de l'écho de télémétrie correspondant.

Suivant les besoins de performances de télémétrie et de communication bien d'autres séquencements de télémétrie et de communication en fonction des longueurs d'onde peuvent être optimisés.

On considère à présent la partie réception d'un équipement multi-longueurs d'onde.

Le dispositif de réception pour la télémétrie comprend de préférence un dispositif d'amplification de chaque impulsion réfléchie qui permet d'amplifier des signaux très faibles en leur ajoutant le minimum de bruit : le but est d'améliorer le rapport signal à bruit de détection. De même que pour l'émission, on peut choisir un dispositif d'amplification large bande qui amplifie indifféremment chaque impulsion et/ou des dispositifs d'amplification à bande étroite qui amplifient spécifiquement chaque impulsion.

Un filtre optique des impulsions réfléchies venant de l'objet est utilisé pour séparer les différents canaux à détecter, c'est-à-dire pour les démultiplexer. La séparation est spectrale.

Après ce filtrage, on peut amplifier les impulsions de chaque canal au moyen d'un amplificateur en bande étroite.

Un détecteur ne peut être utilisé qu'en relation à un seul canal. La distance de l'objet n'étant pas connue, la détection doit être active tant que des échos sont attendus. La détection peut être obtenue par un détecteur apte à détecter les impulsions réfléchies pour plusieurs longueurs d'onde et à les distinguer en fonction de leur longueur d'onde. Il n'y a pas d'avantages manifestes en performances de portée sur le système mono longueur d'onde. Lorsque de grandes portées sont recherchées, il y a avantage à avoir autant de détecteurs que de longueurs d'onde d'émission.

Un dispositif d'accumulation classique est utilisé pour réaliser la post intégration des impulsions détectées.

Le fonctionnement en communication dépend de la capacité du récepteur.

Le dispositif de réception pour la communication peut avoir plusieurs détecteurs dans différentes longueurs d'onde. Chaque longueur d'onde est un canal d'information indépendant des autres.

Le dispositif de réception multi-longueur d'onde peut également fonctionner avec les deux modes imbriqués comme dans le cas du dispositif de réception mono longueur d'onde.

On montre figure 2 un exemple d'équipement de télémétrie et de communication multi longueur d'onde selon l'invention. Il comprend un superviseur 1 apte à recevoir les données de communication ou de télémétrie et à les transmettre au dispositif d'émission commun 10 en séquençant les étapes d'émission et de réception de télémétrie. Le dispositif d'émission comprend un répartiteur en longueur d'onde 14 relié en entrée au superviseur 1 et en sortie à des diodes laser 111, 112, 113, 114 de longueur d'onde différente λ1, λ2, λ3, λi. Le dispositif d'émission commun comprend éventuellement en plus de ces diodes, un amplificateur 12 relié en entrée à chacune des diodes et en sortie à un dispositif optique 13 de mise en forme du faisceau émis. Le dispositif de réception commun 20 comprend un objectif 23 de collecte de la lumière émise par la cible ou par un émetteur de communication distant; cet objectif est éventuellement relié à un amplificateur 22 lui-même relié à des photo détecteurs 211, 212, 213, 214 respectivement dédiés à une longueur d'onde différente) λ1, λ2, λ3, , ..., qui transmettent respectivement leur signal détecté à une unité de traitement 24 apte à fournir en sortie des distances de cibles et des données de communication selon que le superviseur 1 commande cette unité de traitement en mode télémétrie ou communication. Les photodétecteurs sont reliés via un autre répartiteur 25 au superviseur 1.

## Revendications

1. Equipement optique de télémétrie et de communication en espace libre qui comprend un télémètre comportant un dispositif d'émission d'un signal optique vers une cible et un dispositif de réception des signaux rétro-diffusés par la cible, et un système de communication optique en espace libre comportant un dispositif d'émission d'un signal optique vers un dispositif de réception optique distant, **caractérisé en ce que** le dispositif d'émission du télémètre et le dispositif d'émission du système de communication est un dispositif d'émission commun (10) au télémètre et au système de communication et apte à émettre des impulsions dont la puissance crête est supérieure à 50 W et le facteur de forme est inférieur à 0,01 ou un signal continu modulé dont la puissance crête est inférieure à 10 W et le facteur de forme égal à environ 0,5 et **en ce que** l'équipement comprend un superviseur (1) apte à commander le dispositif d'émission commun (10) selon deux modes, le mode impulsionnel pour ainsi assurer la fonction de télémétrie, ou le mode continu modulé pour ainsi assurer la fonction de communication optique.

2. Equipement optique de télémétrie et de communication selon la revendication précédente, **caractérisé en ce que** le dispositif d'émission commun (10) comprend un émetteur à diode laser (11) qui comporte une alimentation électrique, et **en ce que** le superviseur (1) comprend des moyens de commande de l'alimentation électrique de l'émetteur à diode laser.

3. Equipement optique de télémétrie et de communication selon la revendication précédente, **caractérisé en ce que** l'émetteur à diode laser (11) est une diode laser mono-ruban ou un empilement de diodes mono-ruban apte à émettre collectivement.

4. Equipement optique de télémétrie et de communication selon l'une des revendications précédentes, **caractérisé en ce que** le dispositif d'émission (10) comprend un émetteur et un amplificateur (12) relié à la sortie de l'émetteur.

5. Equipement optique de télémétrie et de communication selon l'une des revendications précédentes, **caractérisé en ce qu'**il comprend un dispositif de réception de signaux émis par un autre dispositif de communication optique en espace libre, le dispositif de réception du télémètre et ce dispositif de réception du système de communication étant un dispositif de réception (20) commun, et **en ce que** l'équipement comprend une commande du dispositif de réception en mode télémétrie ou en mode communication.

6. Equipement optique de télémétrie et de communication selon la revendication précédente, **caractérisé en ce que** le superviseur (1) comprend la commande du dispositif de réception commun (20).

7. Equipement optique de télémétrie et de communication selon la revendication précédente, **caractérisé en ce que** les dispositifs communs d'émission (10) et de réception (20) sont multi-longueur d'onde.

8. Equipement optique de télémétrie et de communication selon la revendication précédente, **caractérisé en ce que** l'émetteur multi longueur d'onde comprend plusieurs émetteurs (111, 112, 113, 114), chacun étant apte à émettre selon une longueur d'onde différente des autres et **en ce qu'**il comprend un seul amplificateur (12) large bande relié à tous ces émetteurs.

9. Equipement optique de télémétrie et de communication selon l'une des revendications précédentes, **caractérisé en ce que** le dispositif de réception commun (20) est multi-longueur d'onde, au moins certaines longueurs d'onde de réception étant identiques à certaines longueurs d'onde d'émission.

10. Procédé de télémétrie d'une cible au moyen d'un équipement optique de télémétrie et de communication selon l'une des revendications précédentes qui comprend une étape d'émission vers la cible d'impulsions laser dont la puissance crête est supérieure à 50 W et le facteur de forme est inférieur à 0,01 au moyen du dispositif d'émission commun (10) et une étape de réception des impulsions rétro-diffusées par la cible au moyen du dispositif de réception du signal rétro-diffusé par la cible, **caractérisé en ce qu'**il comprend en outre une étape d'émission d'un signal optique continu modulé de communication dont la puissance crête est inférieure à 10 W et le facteur de forme égal à environ 0,5 vers un dispositif de réception de ce signal de communication au moyen dudit dispositif d'émission commun (10), l'étape d'émission d'un signal de communication étant réalisée en dehors des étapes d'émission et de réception de télémétrie.

11. Procédé de télémétrie d'une cible selon la revendication précédente, **caractérisé en ce qu'**il comprend plusieurs étapes d'émission d'un signal de communication, et **en ce que** l'étape d'émission d'impulsions laser vers la cible, l'étape de réception des impulsions rétro-diffusées par la cible et ces étapes d'émission d'un signal de communication sont imbriquées de manière à ce qu'un signal optique de communication soit émis entre deux impulsions et en dehors de l'étape de réception des impulsions rétro-diffusées par la cible.

12. Procédé de télémétrie d'une cible selon l'une des revendications 10 ou 11, **caractérisé en ce que** le dispositif d'émission comportant un seul amplificateur (12), l'intervalle de temps entre deux impulsions de télémétrie consécutives ou entre la fin d'un signal de communication et l'impulsion de télémétrie consécutive est supérieur ou égal au temps de pompage de l'amplificateur jusqu'à saturation.

13. Procédé de télémétrie d'une cible au moyen d'un équipement selon la revendication 10 ou 11, **caractérisé en ce que** le dispositif d'émission étant multi longueur d'onde et ne comportant qu'un seul amplificateur (12) large bande, l'intervalle de temps entre deux impulsions de télémétrie de longueur d'onde différente et consécutives est supérieur ou égal au temps de pompage de l'amplificateur jusqu'à saturation, l'intervalle de temps entre la fin d'un signal de communication et l'impulsion de télémétrie consécutive de même longueur d'onde est supérieur ou égal au temps de pompage de l'amplificateur jusqu'à saturation, et **en ce que** les signaux de communication de longueur d'onde différente sont émis en même temps.

## Patentansprüche

1. Optische Vorrichtung für Entfernungsmessung und Kommunikation im freien Raum, die Folgendes umfasst: einen Entfernungsmesser, der eine Vorrichtung zum Senden eines optischen Signals zu einem Ziel und eine Vorrichtung zum Empfangen von von dem Ziel zurückgestreuten Signalen umfasst, und ein System für optische Kommunikation im freien Raum, das eine Vorrichtung zum Senden eines optischen Signals zu einer entfernten optischen Empfangsvorrichtung umfasst, **dadurch gekennzeichnet, dass** die Sendevorrichtung des Entfernungsmessers und die Sendevorrichtung des Kommunikationssystems eine dem Entfernungsmesser und dem Kommunikationssystem gemeinsame Sendevorrichtung (10) ist, die Impulse emittieren kann, deren Leistungsspitze größer als 50 W und deren Formfaktor kleiner als 0,01 ist, oder ein moduliertes kontinuierliches Signal, dessen Spitzenleistung kleiner als 10 W und dessen Formfaktor etwa 0,5 ist, und dadurch, dass die Vorrichtung einen Supervisor (1) umfasst, der die gemeinsame Sendevorrichtung (10) in zwei Betriebsarten steuern kann, der Impulsbetriebsart zum Gewährleisten der Entfernungsmessfunktion, oder der modulierten kontinuierlichen Betriebsart zum Gewährleisten der optischen Kommunikationsfunktion.

2. Optische Vorrichtung für Entfernungsmessung und Kommunikation nach dem vorherigen Anspruch, **dadurch gekennzeichnet, dass** die gemeinsame Sendevorrichtung (10) einen Laserdiodensender (11) umfasst, der eine Stromversorgung umfasst, und dadurch, dass der Supervisor (1) Mittel zum Steuern der Stromversorgung des Laserdiodensenders umfasst.

3. Optische Vorrichtung für Entfernungsmessung und Kommunikation nach dem vorherigen Anspruch, **dadurch gekennzeichnet, dass** der Laserdiodensender (11) eine Einband-Laserdiode oder ein Stapel von Einbanddioden ist, die kollektiv senden können.

4. Optische Vorrichtung für Entfernungsmessung und Kommunikation nach einem der vorherigen Ansprüche, **dadurch gekennzeichnet, dass** die Sendevorrichtung (10) einen Sender und einen mit dem Ausgang des Senders verbundenen Verstärker (12) umfasst.

5. Optische Vorrichtung für Entfernungsmessung und Kommunikation nach einem der vorherigen Ansprüche, **dadurch gekennzeichnet, dass** sie eine Vorrichtung zum Empfangen von von einer anderen optischen Kommunikationsvorrichtung im freien Raum gesendeten Signalen umfasst, wobei die Empfangsvorrichtung des Entfernungsmessers und diese Empfangsvorrichtung des Kommunikationssystems eine gemeinsame Empfangsvorrichtung (20) sind, und dadurch, dass die Vorrichtung eine Steuerung der Empfangsvorrichtung im Entfernungsmessmodus oder im Kommunikationsmodus umfasst.

6. Optische Vorrichtung für Entfernungsmessung und Kommunikation nach dem vorherigen Anspruch, **dadurch gekennzeichnet, dass** der Supervisor (1) die Steuerung der gemeinsamen Empfangsvorrichtung (20) umfasst.

7. Optische Vorrichtung für Entfernungsmessung und Kommunikation nach dem vorherigen Anspruch, **dadurch gekennzeichnet, dass** die gemeinsamen Vorrichtungen zum Senden (10) und zum Empfangen (20) für mehrere Wellenlängen sind.

8. Optische Vorrichtung für Entfernungsmessung und Kommunikation nach dem vorherigen Anspruch, **dadurch gekennzeichnet, dass** der Multiwellenlängensender mehrere Sender (111, 112, 113, 114) umfasst, die jeweils mit einer anderen Wellenlänge senden können als die anderen, und dadurch, dass sie einen einzigen Breitbandverstärker (12) umfasst, der mit allen diesen Sendern verbunden ist.

9. Optische Vorrichtung für Entfernungsmessung und Kommunikation nach einem der vorherigen Ansprüche, **dadurch gekennzeichnet, dass** die gemeinsame Empfangsvorrichtung (20) für mehrere Wellenlängen ist, wobei wenigstens bestimmte Empfangswellenlängen mit bestimmten Sendewellenlängen identisch sind.

10. Verfahren zur Entfernungsmessung eines Ziels mittels einer optischen Vorrichtung für Entfernungsmessung und Kommunikation nach einem der vorherigen Ansprüche, das einen Schritt des Sendens von Laserimpulsen zu dem Ziel, deren Spitzenleistung größer als 50 W und dessen Formfaktor kleiner als 0,01 ist, mittels der gemeinsamen Sendevorrichtung (10), und einen Schritt des Empfangens von von dem Ziel zurückgestreuten Impulsen mittels der Vorrichtung zum Empfangen des von dem Ziel zurückgestreuten Signals beinhaltet, **dadurch gekennzeichnet, dass** es darüber hinaus einen Schritt des Sendens eines modulierten kontinuierlichen optischen Kommunikationssignals, dessen Spitzenleistung kleiner als 10 W und dessen Formfaktor etwa 0,5 ist, zu einer Vorrichtung zum Empfangen dieses Kommunikationssignals mittels der gemeinsamen Sendevorrichtung (10) beinhaltet, wobei der Schritt des Sendens eines Kommunikationssignals außerhalb der Entfernungsmessungssende- und-Empfangsschritte ausgeführt wird.

11. Verfahren zur Entfernungsmessung eines Ziels nach dem vorherigen Anspruch, **dadurch gekennzeichnet, dass** es mehrere Schritte des Sendens eines Kommunikationssignals beinhaltet, und dadurch, dass der Schritt des Sendens von Laserimpulsen zu dem Ziel, der Schritt des Empfangens der vom Ziel zurückgestreuten Impulse und diese Schritte des Sendens eines Kommunikationssignals so verschachtelt sind, dass ein optisches Kommunikationssignal zwischen zwei Impulsen und außerhalb des Schrittes des Empfangens der vom Ziel zurückgestreuten Impulse ausgesendet wird.

12. Verfahren zur Entfernungsmessung eines Ziels nach Anspruch 10 oder 11, **dadurch gekennzeichnet, dass**, da die Sendevorrichtung einen einzigen Verstärker (12) umfasst, das Zeitintervall zwischen zwei aufeinander folgenden Entfernungsmessimpulsen oder zwischen dem Ende eines Kommunikationssignals und dem aufeinander folgenden Entfernungsmessimpuls gleich oder größer als die Zeit zum Pumpen des Verstärkers bis zur Sättigung ist.

13. Verfahren zur Entfernungsmessung eines Ziels mit einer Vorrichtung nach Anspruch 10 oder 11, **dadurch gekennzeichnet, dass**, da die Sendevorrichtung für mehrere Wellenlängen ist und nur einen Breitbandverstärker (12) hat, das Zeitintervall zwischen zwei Entfernungsmessimpulsen von unterschiedlicher Wellenlänge und aufeinander folgend gleich oder größer ist als die Zeit zum Pumpen des Verstärkers bis zur Sättigung, das Zeitintervall zwischen dem Ende eines Kommunikationssignals und dem aufeinander folgenden Entfernungsmessimpuls derselben Wellenlänge gleich oder größer ist als die Zeit zum Pumpen des Verstärkers bis zur Sättigung, und dadurch, dass die Kommunikationssignale von unterschiedlicher Wellenlänge gleichzeitig gesendet werden.

## Claims

1. An optical apparatus for range-finding and communicating in free space, comprising: a range-finder comprising a device for emitting an optical signal toward a target and a device for receiving signals backscattered by the target, and a system for optically communicating in free space comprising a device for emitting an optical signal toward a remote optical reception device, **characterised in that** said emission device of said range-finder and said emission device of said communication system is an emission device (10) that is common to said range-finder and said communication system and is designed to emit pulses, the peak power of which is greater than 50 W and the shape factor of which is less than 0,01, or to emit a modulated continuous signal, the peak power of which is less than 10 W and the shape factor of which is equal to approximately 0,5, and **in that** said apparatus comprises a supervisor (1) designed to control said common emission device (10) in two modes: the pulse mode so as to provide the range-finding function or the modulated continuous mode so as to provide the optical communication function.

2. The optical apparatus for range-finding and communicating according to the preceding claim, **characterised in that** said common emission device (10) comprises a laser diode emitter (11), which comprises an electrical power supply, and **in that** said supervisor (1) comprises means for controlling the electrical power supply of said laser diode emitter.

3. The optical apparatus for range-finding and communicating according to the preceding claim, **characterised in that** said laser diode emitter (11) is a mono-strip laser diode or a stack of mono-strip diodes designed to emit collectively.

4. The optical apparatus for range-finding and communicating according to any one of the preceding claims, **characterised in that** said emission device (10) comprises an emitter and an amplifier (12) connected to the output of said emitter.

5. The optical apparatus for range-finding and communicating according to any one of the preceding claims, **characterised in that** it comprises a device for receiving signals emitted by another device for optical communication in free space, with said reception device of said range-finder and said reception device of said communication system being a common reception device (20), and **in that** said apparatus comprises a control of said reception device in range-finding mode or in communication mode.

6. The optical apparatus for range-finding and communicating according to the preceding claim, **characterised in that** said supervisor (1) comprises the control of said common reception device (20).

7. The optical apparatus for range-finding and communicating according to the preceding claim, **characterised in that** said common emission (10) and reception (20) devices are for multiple wavelengths.

8. The optical apparatus for range-finding and communicating according to the preceding claim, **characterised in that** said multiple wavelength emitter comprises a plurality of emitters (111, 112, 113, 114), each being designed to emit on a different wavelength to that of the other emitters, and **in that** it comprises a single wideband amplifier (12) connected to all of said emitters.

9. The optical apparatus for range-finding and communicating according to any one of the preceding claims, **characterised in that** said common reception device (20) is for multiple wavelengths, with at least certain reception wavelengths being identical to certain emission wavelengths.

10. A method for target range-finding using optical apparatus for range-finding and communicating according to any one of the preceding claims, comprising a step of emitting laser pulses toward the target, the peak power of which is greater than 50 W and the shape factor of which is less than 0,01, by means of said common emission device (10), and a step of receiving pulses backscattered by the target using said device for receiving the signal backscattered by the target, **characterised in that** it further comprises a step of emitting, by means of said common emission device (10), a continuous modulated optical communication signal, the peak power of which is less than 10 W and the shape factor of which is equal to approximately 0,5, toward a device for receiving said communication signal, with said step of emitting a communication signal being carried out outside of the range-finding emission and reception steps.

11. The method for target range-finding according to the preceding claim, **characterised in that** it comprises a plurality of steps of emitting a communication signal, and **in that** said step of emitting laser pulses toward the target, said step of receiving pulses backscattered by the target and said steps of emitting a communication signal are interleaved so that an optical communication signal is emitted between two pulses and outside of said step of receiving pulses backscattered by the target.

12. The method for target range-finding according to claim 10 or 11, **characterised in that**, with said emission device (12) comprising a single amplifier, the time interval between two consecutive range-finding pulses or between the end of a communication signal and the consecutive range-finding pulse is greater than or equal to the time for pumping said amplifier to saturation.

13. The method for target range-finding using apparatus according to claim 10 or 11, **characterised in that**, with said emission device being for multiple wavelengths and comprising only one wideband amplifier (12), the time interval between two consecutive range-finding pulses with a different wavelength is greater than or equal to the time for pumping said amplifier to saturation, the time interval between the end of a communication signal and the consecutive range-finding pulse with the same wavelength is greater than or equal to the time for pumping the amplifier to saturation, and **in that** the communication signals with different wavelengths are emitted at the same time.
